# EUROPEAN PATENT SPECIFICATION

(11) **EP 2 401 217 B1**
(45) Date of publication and mention of the grant of the patent: **18.09.2013**
(21) Application number: 10706909.8
(22) Date of filing: 25.02.2010
(51) Int. Cl.: B65G 59/02, B65G 61/00, B65G 47/90, B65G 47/91

(54) **APPARATUS FOR HANDLING LAYERS OF PALLETISED GOODS**
VORRICHTUNG ZUM HANDHABEN VON SCHICHTEN VON PALETTIERTEN GÜTERN
APPAREIL DE MANUTENTION DE COUCHES DE MARCHANDISES PALETTISÉES

(30) Priority: 27.02.2009 DK 200900285
(43) Date of publication of application: 04.01.2012
(73) Proprietor: Univeyor A/S, 9510 Arden (DK)
(72) Inventor: CHRISTENSEN, Torben, DK-9510 Arden (DK); KJELDGAARD HANSEN, Henrik, DK-9700 Brønderslev (DK)
(74) Representative: Gregersen, Niels Henrik
(86) International application number: PCT/DK2010/050047
(87) International publication number: WO 2010/097088

(56) References cited:
- WO-A1-00/64790
- WO-A1-2007/131668
- DE-A1- 4 206 038

## Description

### Field of the Invention

The present invention concerns an apparatus for handling layers of palletised goods and of the kind indicated in the preamble of claim 1.

### Background of the Invention

In order to provide effective and cheap distribution of goods, many goods are distributed on pallets, by way of example on so-called EU pallets (800 x 1200 mm). Yet a continuing increasing need has appeared for also dispatching orders comprising smaller consignments of goods in a correspondingly efficient way. Statistically it has appeared that many orders for small shops actually consist of consignments of goods often consisting of very few layers or maybe just a single layer of palletised goods.

WO 00/64790 A1 and WO 2008/019691 A1 disclose apparatuses for handling layers of palletised goods, the apparatuses comprising a vertically displaceable lift head with a horizontal suction face which in size is adapted to a pallet and consisting of a large number of downwards open suction chambers. The suction face is arranged to be moved downwards against the top side of an upper layer of individually or groupwise packed goods on a pallet, where the suction chambers via individual valves are connected with a source of vacuum incorporated in the lift head, and where the apparatuses are intended for interacting with depalletising systems known per se WO 00/64790 A1 in particular discloses an apparutus according to the preamble of claim 1.

The valves between the suction chambers and the source of vacuum are designed as ball valves with very light thin-walled valve bodies that are enclosed in the suction chamber by means of lateral projections or by means of a retainer net, and which interact with upper round valve openings with spherical valve seats at the bottom if the actual suction chamber is not closed at the bottom by contacting the top side of the goods in an upper pallet layer. Along the outer sides of the suction face, the lift head comprises squeezing means adapted to exert an inwardly pressure at the outer sides of the goods in at least an uppermost pallet layer. In connection with each valve there are arresting means adapted to prevent the valve balls from shutting off the valves, such that it is ensured hereby that the shut-off valves of the suction face can be forcibly opened where there is a contact to the goods in the pallet layer, and can be forcibly opened where there are gaps or openings in the pallet layer. The descriptions of these previous inventions are hereby incorporated in the present application by reference.

In connection with the hitherto common handling of layers of palletised goods, one has primarily worked with rectilinear lifting and moving of pallet layers, i.e. moving pallet layers mutually between positions on mutually perpendicular pallet ways.

Experiments have been made using robot technology for moving palletised layers of goods by means of current suction heads. However, using robots means an entirely different movement pattern which also includes swinging movements of suction heads, putting significantly greater demands on the suction ability in order to hold the relatively heavy and possibly open pallet layer in a secure way during swinging movements where centrifugal force actions occur.

### Object of the Invention

The invention has the object of indicating a new and improved apparatus of the kind specified in the introduction, that is an apparatus for handling layers of palletised goods which enables achieving greater certainty, by way of example by mechanised layerwise destacking of individual articles from a pallet, that is even if the individual pallet layers include gaps between the articles or include articles that are film-covered in such a way that openings in the pallet layer are formed upwards, and even if there is used a lifting head operated by a robot with occurrence of relatively rapid swinging movements.

### Description of the Invention

The apparatus according to the invention comprises the preamble of claim 1 and is characterised in that said adjustable skirt interacts with a two-part flexible curtain which at opposing ends of the suction face each are connected with said adjustable skirt and adapted from each their side of said suction face to be moved inwardly along the underside of the lifted pallet layer to a position predominantly at the middle under the suction face, such that said two-part flexible curtain is disposed at the underside of the lifted pallet layer and is capable of supporting the latter.

By means of simple measures is hereby achieved a new and significantly improved apparatus for handling pallet layers of mixed goods, making it possible to handle many different types of palletised goods in layers with great certainty, in spite of using robot technology that includes relatively rapid swinging movements of the suction head.

The apparatus according to the invention is suitably designed such that a transverse end of respective curtain parts are connected with the skirt, that an opposite end of respective curtain parts are connected to a rotating shaft for each their magazine with associated drive motor, that respective curtain parts between the skirt and the magazines run around each their transverse shaft which is adapted to be moved inwardly along the underside of the lifted pallet layer, as the transverse shafts are designed or provided at opposing ends with a toothed rim which is in driving engagement with a stationary toothed rack running along opposite sides of the suction face perpendicularly to the transverse shafts, and that the transverse shafts are drivingly connected with each their drive motor.

With the object of ensuring a secure and stable engagement between toothed rim and toothed rack, the apparatus according to the invention is designed such that the transverse shafts and the associated drive motors are suspended in support holders at opposite sides of a support frame by means of support rollers. The rollers are supported on a preferably complementary support profile of the support frame.

The apparatus according to the invention is suitably further designed such that that the drive motors are constituted by rapid reversible servomotors, possibly with suitable gearing.

### Description of the Drawing

The invention is explained in more detail in the following with reference to the drawing, on which:

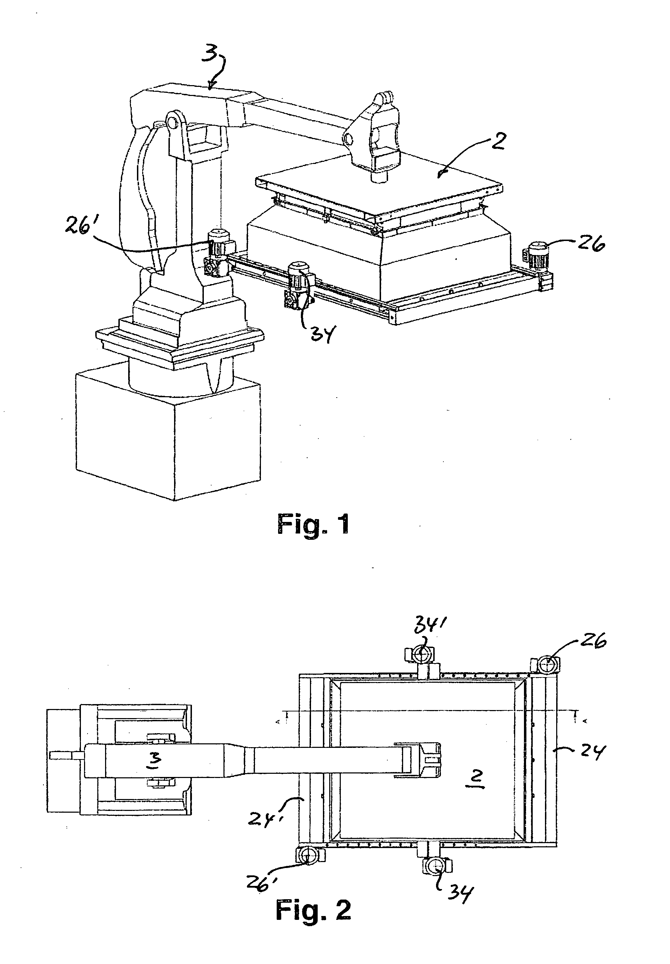

- Fig. 1: shows a perspective view of an embodiment of an apparatus with a lift head according to the invention handled by a robot;
- Fig. 2: shows a plan view of the apparatus shown in Fig. 1, as seen from the top;

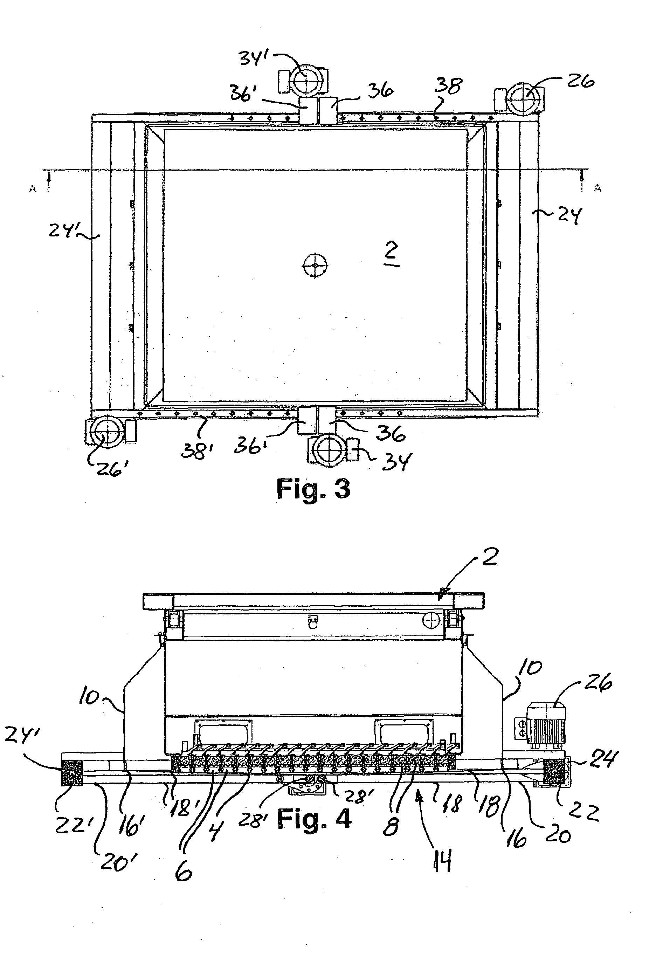

- Fig. 3: shows a plan view of the lift head, as seen from above;
- Fig. 4: shows a view, partly in section, of a preferred embodiment of a lift head for an apparatus according to the invention, as seen from the side and shown with an embodiment for a curtain which is inserted under the suction face of the lift head;

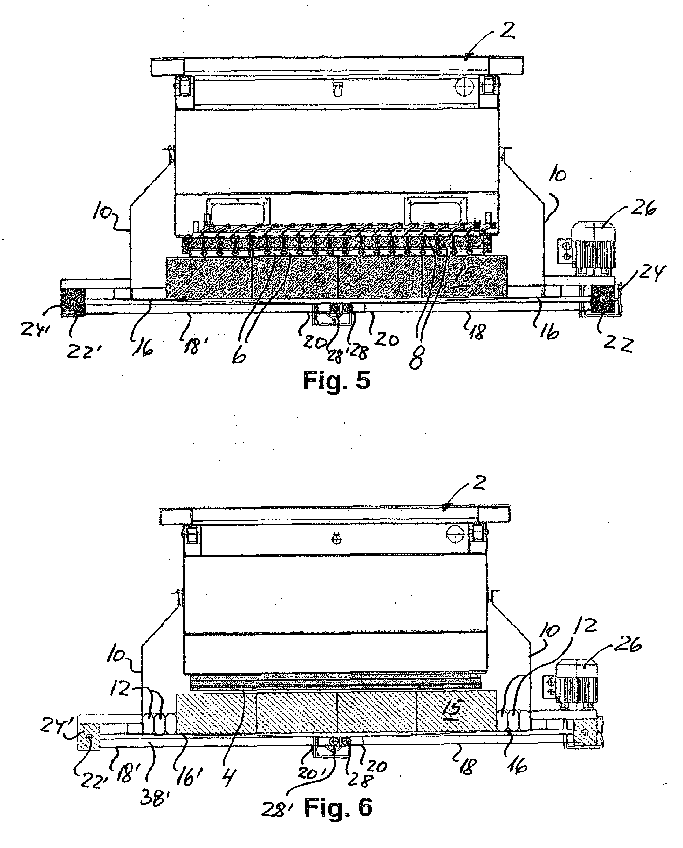

- Fig. 5: shows a view, partly in section, from the side of the lift head shown in Fig. 4, where a pallet layer of box-shaped goods are carried by the suction face, and where the curtain is inserted under the pallet layer;
- Fig. 6: shows a view, partly in section, from the side of the matter shown in Fig. 4, where it is further shown that the pallet layer is clamped and partially supported by a surrounding skirt with internal inflatable squeezing pads;
- Fig. 7: shows a plan view corresponding to Fig. 3, as seen from above, where curtain parts are inserted under the pallet layer;
- Fig. 8: shows a partly sectional view, as seen from the side, where curtain parts are inserted under the pallet layer;
- Fig. 9: shows a detail view, showing a front end of the curtain during insertion under the pallet layer; and
- Fig. 10: shows a detail, showing an embodiment of an insertion mechanism for the curtain for an apparatus according to the invention.

### Detailed Description of Embodiments of the Invention

In a preferred embodiment, the apparatus according to the invention includes a lift head 2 adapted for destacking by layers of articles from a filled pallet that by way of example is taken from a rollerway.

The lift head 2, which is suspended from a common industrial robot 3, interacts with an external vacuum source in the form of a powerful centrifugal blower which via an air distribution chamber and individual ball valves 8 communicate with a large number of downwardly open suction chambers 6 that together constitute a common rectangular suction face 4, which is adapted in size for a standard pallet, by way of example an EU pallet or a UK pallet.

The lift head 2 includes, as with WO 00/64790 A1 and WO 2008/019691 A1 mentioned in the introduction, a special vertically adjustable, outer squeezing arrangement which at the outer sides of the suction face comprises a number of inflatable squeezing pads 12 as well as a skirt 10. The squeezing pads 12 are operated by a high pressure blower, by way of example a side duct blower.

The lift head 2 is mounted in a common industrial robot 3, meaning that the movement pattern of the lift head 2 is considerably extended compared with the normal movement pattern where the lift head 2 is suspended from either a stationary or a movable lift hanger. As a novelty, the industrial robot 3 provides relatively rapid swinging movements, meaning that pallet layers suspended under the suction face 4 of the lift head 2 may also be subjected to centrifugal forces, which is a new occurrence.

In order to ensure optimal sucking function of the suction face 4 and also during swinging movements to avoid throwing around with goods from a pallet layer suspended under the suction face 4 in an uncontrolled way, the suction head 2 on the apparatus according to the invention includes a lower curtain 14 which, cf. the preferred embodiment shown in the drawing, consists of two curtain parts 18, 18' that may be moved inwardly from each their side of the suction face 4 in the way described below along the underside of the suction face 4 or preferably along the underside of a pallet layer 15, to a position about the middle under the suction face 4 and the pallet layer 15, respectively.

The curtain 14 and the curtain parts 18, 18', respectively, consist of a thin, flexible curtain of wear-resistant airtight material, for example a thin canvas-covered rubber curtain. A synthetic neoprene-rubber curtain is preferably used, by way of example with an anti-friction coating on the side in contact with the underside of the pallet layer 15 and the suction face 14, respectively.

In other words, the curtain parts 18, 18' have double function, namely to ensure optimal sucking function when operating with pallet layers 15 with goods having a relatively open structure - by way of example film-covered bottle groups - and to counteract dropping of heavy articles - by way of example during relatively rapid swinging movements of the suction head 2.

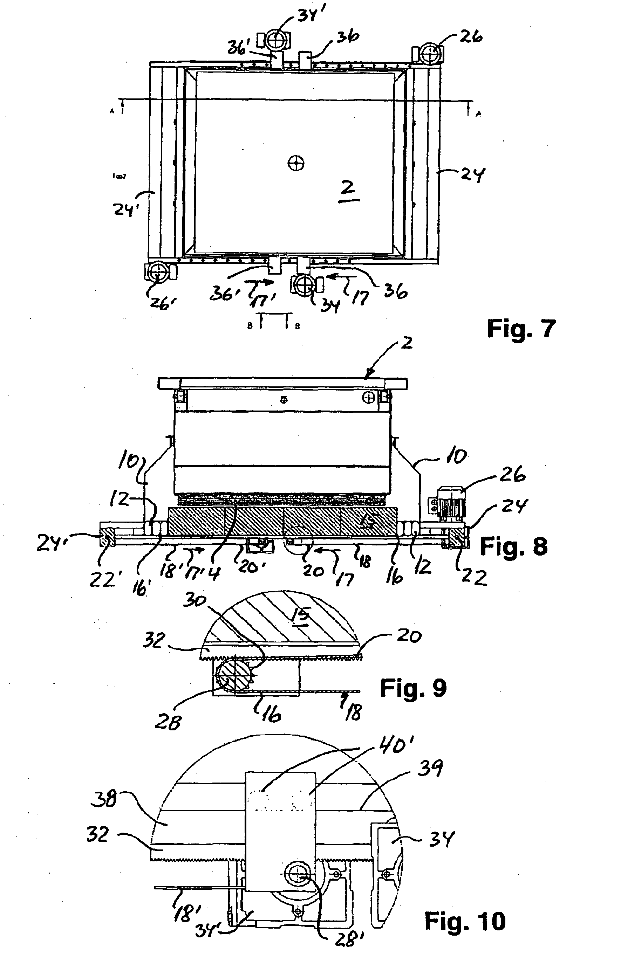

In connection with Figs. 7-10 it is explained in more detail how the two-part curtain consisting of the curtain parts 18, 18' in practice are moved inwardly from both sides of the suction face 4 along the underside of a pallet layer 15 to a position about the middle under the pallet layer 15. By arrows 17, 17' it is indicated that Figs. 7-10 show a situation where respective curtain parts 18, 18' are on their way inwardly towards the end position about the middle under the pallet layer 15, at which there will be a narrow transverse open slot of about 20 mm which will not be covered by the curtain parts 18, 18'.

When the suction face 4 of the suction head 2 is moved downwardly for abutting upon a pallet layer 15 of by way of example box-shaped articles as shown, the curtain parts 18, 18' will be moved right up to respective sides of the suction face 4 and be entirely rolled up on each their transverse shaft 22, 22' in each their magazine 24, 24' by means of the servomotors 26, 26'.

Subsequently, the curtain parts 18, 18' are moved by activating the servomotors 34, 34' for rotating movable transverse shafts 28, 28' which at opposing ends are designed or provided with toothed rims 30 engaging stationary toothed racks 32. The foremost double ends 20, 20' of the curtain parts 18, 18' running around the transverse shafts 28, 28' are hereby moved inwards along the underside of the pallet layer 15 until they reach the previously mentioned position about the middle under the pallet layer 15.

Prior to releasing the pallet layer 15 from the suction face 4 at the desired position, the curtain parts 18, 18' are again to be moved outwards in order to release the pallet layer 15. This is effected by means of the servomotors 26, 26' which draw the curtain parts 18, 18' outwardly to both sides until the curtain parts 18, 18' are again disposed at their initial positions rolled up on transverse shafts 22, 22' of the magazines 24, 24'.

It is to be noted that the application of the curtain 14 is not always required or necessary, even though the suction head 2 is handled by means of industrial robot 3, for example when handling very light or just semi-heavy pallet layers 15, and where the case is pallet layers 15 with relatively light, closed box packings with sealed surface.

Moving the curtain parts 18, 18' in and out along each their part of the underside of the pallet layer 15 or the suction face 4 occurs very fast - by way of example in the course of about 1-2 seconds.

Finally, it is to be mentioned that an alternative method of rapid moving in and out of the curtain parts 18, 18' under the pallet layer 15 will be to use common servomotors 26, 26' for the magazines 24, 24 and the transverse shafts 28, 28', as the latter by way of example could be connected to the servomotors 26, 26' by means of an endless toothed belt running between toothed rims 30 at opposite ends of the shafts 28, 28' and the servomotors 26, 26' and over vertically adjustable tensioning gear wheels at each side of the suction head 2. Another alternative would be to use flexible drive shafts between common servomotors for the magazines 24, 24' and the transverse shafts 28, 28'.

### Reference numbers of the drawing

- 2: lift head
- 3: industrial robot
- 4: suction face
- 6: suction chamber
- 8: valve
- 10: skirt
- 12: squeezing pads
- 14: curtain
- 15: pallet layer
- 16, 16': transverse ends of curtain parts (at skirt)
- 18, 18': curtain parts
- 20, 20': opposite ends of curtain parts (at the middle under suction face)
- 22, 22': shafts, stationary (magazines)
- 24, 24': magazine
- 26, 26': electric drive motor (servomotor)
- 28, 28': transverse movable shafts
- 30: toothed rim at opposite ends of movable shafts
- 32: toothed rack, stationary
- 34, 34': electric drive motor (servomotor)
- 36, 36': support holder
- 38, 38': support frame with
- 39: support profile
- 40': support rollers

## Claims

1. An apparatus for handling layers of palletised goods, including a lift head (2) with a substantially horizontal suction face (4) which is adapted in size for a pallet and consists of a large number of downwardly open suction chambers (6), which via individual valves (8) are connected to a vacuum source, by way of example in the form of a centrifugal blower, which is incorporated in the lift head (2) or provided externally, the suction face (4) being arranged to be moved against the top side of an upper layer of goods on a pallet, where the valves are designed to be closed if the associated suction chamber (6) is not closed downwardly by contacting the top side of the goods on the uppermost pallet layer, the lift head (2) along the outer sides of the suction face (4) including a vertically adjustable skirt (10) with inflatable squeezing pads (12), which by way of example are operated by an external high pressure blower, and which are adapted for exerting an inwardly directed pressure on the outer sides of at least the goods in the upper pallet layer, **characterised in that** said adjustable skirt (10) interacts with a two-part flexible curtain (18, 18') which at opposing ends of the suction face (4) each are connected with said adjustable skirt (10) and adapted from each their side of said suction face (4) to be moved inwardly along the underside of the lifted pallet layer to a position predominantly at the middle under the suction face (4), such that said two-part flexible curtain (18, 18') is disposed at the underside of the lifted pallet layer and is capable of supporting the latter.

2. Apparatus according to claim 1, **characterised in that** a transverse end (16, 16') of respective curtain parts (18, 18') are connected with the skirt (10), that an opposite end (20, 20') of respective curtain parts (18, 18') are connected to a rotating shaft (22, 22') for each their magazine (24, 24') with associated drive motor (26, 26'), that respective curtain parts (18, 18') between the skirt (10) and the magazines (24, 24') run around each their transverse shaft (28, 28') which is adapted to be moved inwardly along the underside of the lifted pallet layer, as the transverse shafts (28, 28') are designed or provided at opposing ends with a toothed rim (30) which is in driving engagement with a stationary toothed rack (32) running along opposite sides of the suction face (4) perpendicularly to the transverse shafts (28, 28'), and that the transverse shafts (28, 28') are drivingly connected with each their drive motor (34, 34').

3. Apparatus according to claim 2, **characterised in that** the transverse shafts (28, 28') and the associated drive motors (34, 34') are suspended in support holders (36, 36') at opposite sides of a support frame (38, 38') by means of support rollers (40').

4. Apparatus according to claim 3, **characterised in that** the support rollers (40') are supported by a preferably complementary support profile (39) of the support frame (38, 38').

5. Apparatus according to any one of claims 2-4, **characterised in that** the drive motors (26, 26', 34, 34') are constituted by rapid reversible servomotors, possibly with suitable gearing.

## Patentansprüche

1. Vorrichtung zum Handhaben von Schichten paletisierter Güter, die einen Hubkopf (2) mit einer im Wesentlichen horizontalen Saugfläche (4) umfasst, deren Größe an eine Palette angepasst ist und die aus einer großen Anzahl von nach unten offenen Saugkammern (6) besteht, die über einzelne Ventile (8) mit einer Vakuumquelle verbunden sind, die beispielsweise die Form eines Zentrifugalgebläses hat und die in den Hubkopf (2) integriert ist oder extern angeordnet ist, wobei die Saugfläche (4) dafür eingerichtet ist, gegen die Oberseite einer oberen Schicht von Gütern auf einer eingerichtet bewegt zu werden, wobei die Ventile dafür ausgelegt sind, geschlossen zu werden, wenn die zugehörige Saugkammer (6) nicht nach unten hin durch Berühren der Oberseite der Güter auf der obersten Palettenschicht geschlossen wird, wobei der Hubkopf (2) entlang der Außenseiten der Saugfläche (4) eine vertikal verstellbare Einfassung (10) mit aufblasbaren Klemmkissen (12) umfasst, die beispielsweise durch ein externes Hochdruckgebläse betrieben werden und die dafür eingerichtet sind, einen nach innen gerichteten Druck auf die Außenseiten mindestens der Güter in der oberen Palettenschicht auszuüben, **dadurch gekennzeichnet, dass** die verstellbare Einfassung (10) mit einem aus zwei Teilen bestehenden flexiblen Vorhang (18, 18') interagiert, die jeweils an gegenüberliegenden Enden der Saugfläche (4) mit der verstellbaren Einfassung (10) verbunden sind und dafür eingerichtet sind, von ihrer jeweiligen Seite der Saugfläche (4) aus entlang der Unterseite der angehobenen Palettenschicht nach innen zu einer Position bewegt zu werden, die sich vorwiegend in der Mitte unter der Saugfläche (4) befindet, so dass sich der zweiteilige flexible Vorhang (18, 18') an der Unterseite der angehobenen Palettenschicht befindet und in der Lage ist, letztere zu stützen.

2. Vorrichtung nach Anspruch 1, **dadurch gekennzeichnet, dass** ein quer verlaufendes Ende (16, 16') jedes Vorhangteils (18, 18') mit der Einfassung (10) verbunden ist, dass ein gegenüberliegendes Ende (20, 20') jedes Vorhangteils (18, 18') mit einer Drehwelle (22, 22') für sein jeweiliges Magazin (24, 24') mit zugehörigem Antriebsmotor (26, 26') verbunden ist, dass jeweilige Vorhangteile (18, 18') zwischen der Einfassung (10) und den Magazinen (24, 24') um ihre jeweilige Querwelle (28, 28') herum verlaufen, die dafür eingerichtet ist, entlang der Unterseite der angehobenen Palettenschicht nach innen bewegt zu werden, da die Querwellen (28, 28') an gegenüberliegenden Enden mit einem gezahnten Rand (30) ausgebildet oder versehen sind, der in antreibendem Eingriff mit einer ortsfesten Zahnstange (32) steht, die sich entlang gegenüberliegenden Seiten der Saugfläche (4) senkrecht zu den Querwellen (28, 28') erstreckt, und dass die Querwellen (28, 28') in antreibender Weise mit ihrem jeweiligen Antriebsmotor (34, 34') verbunden sind.

3. Vorrichtung nach Anspruch 2, **dadurch gekennzeichnet, dass** die Querwellen (28, 28') und die zugehörigen Antriebsmotoren (34, 34') auf gegenüberliegenden Seiten eines Stützrahmens (38, 38') mittels Stützrollen (40') in Stützhaltern (36, 36') aufgehängt sind.

4. Vorrichtung nach Anspruch 3, **dadurch gekennzeichnet, dass** die Stützrollen (40') durch ein bevorzugt komplementäres Stützprofil (39) des Stützrahmens (38, 38') gestützt werden.

5. Vorrichtung nach einem der Ansprüche 2-4, **dadurch gekennzeichnet, dass** die Antriebsmotoren (26, 26', 34, 34') von schnellen umkehrbaren Servomotoren gebildet sind, die gegebenenfalls mit einem geeigneten Getriebe ausgestattet sind.

## Revendications

1. Appareil de manutention de couches de marchandises palettisées, contenant une tête de levage (2) avec une face d'aspiration sensiblement horizontale (4), dont la taille est adaptée à une palette et qui se compose d'un grand nombre de chambres d'aspiration ouvertes vers le bas (6) qui sont reliées via des robinets individuels (8) à une source de vide, par exemple en forme d'une soufflante centrifuge qui est intégrée dans la tête de levage (2) ou prevue extérieurement, la face d'aspiration (4) étant disposée de sorte à être déplacée contre le côté supérieur d'une couche supérieure de marchandises sur une palette, dans lequel lesdits robinets sont conçus de sorte à être fermés si la chambre d'aspiration associée (6) n'est pas bloquée vers le bas en touchant le côté supérieur des marchandises sur la couche de palette supérieure, laquelle tête de levage (2) le long des côtés extérieurs de la face d'aspiration (4) comprend une bordure ajustable verticalement (10) avec des tampons de serrage gonflables (12) qui par exemple sont actionnés par une soufflante externe à haute pression, et qui sont adaptés pour exercer une pression dirigée vers l'intérieur sur les côtés extérieurs d'au moins les marchandises situées dans la couche de palette supérieure, **caractérisé en ce que** ladite bordure ajustable (10) interagit avec un rideau flexible en deux parties (18, 18') qui au niveau des extrémités opposées de la face d'aspiration (4) chacun est connecté à ladite bordure ajustable (10) et adapté à partir de chaque côté de ladite face d'aspiration (4) à être déplacé vers l'intérieur le long de la face inférieure de la couche de palette soulevée à une position principalement au milieu sous la face d'aspiration (4), de telle sorte que ledit rideau flexible en deux parties (18, 18') est disposé au niveau de la face inférieure de la couche de palette soulevée et est capable de soutenir celle-ci.

2. Appareil selon la revendication 1, **caractérisé en ce qu**'une extrémité transversale (16, 16') des parties de rideau respectives (18, 18') est connectée à la bordure (10), qu'une extrémité opposée (20, 20') des parties de rideau respectives (18, 18') est connectée à un arbre rotatif (22, 22') pour chaque magasin (24, 24') comprenant un moteur d'entraînement associé (26, 26'), que les parties de rideau respectives (18, 18') entre la bordure (10) et les magasins (24, 24') s'étendent chacune autour de son arbre transversal (28, 28') qui est adapté pour être déplacé vers l'intérieur le long de la face inférieure de la couche de palette soulevée, vu que les arbres transversaux (28, 28') étant conçus ou prévus au niveau d'extrémités opposées avec une couronne dentée (30) qui est en prise d'entraînement avec une crémaillère dentée fixe (32) s'étendant le long des côtés opposés de la face d'aspiration (4) perpendiculairement aux arbres transversaux (28, 28'), et en ce que les arbres transversaux (28, 28') sont en liaison d'entraînement chacun avec leur (34, 34') moteur d'entraînement.

3. Appareil selon la revendication 2, **caractérisé en ce que** les arbres transversaux (28, 28') et les moteurs d'entraînement associés (34, 34') sont en suspension dans des supports (36, 36') au niveau des côtés opposés d'un cadre de support (38, 38') au moyen de rouleaux de support (40').

4. Appareil selon la revendication 3, **caractérisé en ce que** les rouleaux de support (40') sont supportés par un profil de support de préférence complémentaire (39) du cadre de support (38, 38').

5. Appareil selon l'une quelconque des revendications 2 à 4, **caractérisé en ce que** les moteurs d'entraînement (26, 26', 34, 34') sont constitués par des servomoteurs rapides réversibles, éventuellement avec un engrenage approprié.
